# EUROPEAN PATENT SPECIFICATION

(11) **EP 1 132 591 B1**
(45) Date of publication and mention of the grant of the patent: **01.06.2005**
(21) Application number: 01105600.9
(22) Date of filing: 06.03.2001
(51) Int. Cl.: F02B 23/10, F02F 3/26

(54) **Internal combustion engine of an in-cylinder fuel injection type**
Direkteinspritzbrennkraftmaschine
Moteur à combustion interne à injection directe

(30) Priority: 06.03.2000 JP 2000061284
(43) Date of publication of application: 12.09.2001
(73) Proprietor: YAMAHA HATSUDOKI KABUSHIKI KAISHA, Iwata-shi Shizuoka-ken (JP)
(72) Inventor: Suzuki, Yuichi, Iwata-shi, Shizuoka-ken (JP); Kurosawa, Shinichi, Iwata-shi, Shizuoka-ken (JP); Kinoshita, Yuji, Iwata-shi, Shizuoka-ken (JP)
(74) Representative: Grünecker, Kinkeldey, Stockmair & Schwanhäusser Anwaltssozietät

(56) References cited:
- EP-A- 0 839 997
- DE-A- 19 816 743
- DE-A- 19 920 735
- DE-A- 19 923 251
- FR-A- 2 778 432

## Description

This invention relates to an internal combustion engine of an in-cylinder fuel injection type. In particular to a four-stroke cycle engine having a fuel injection valve being capable of injecting fuel into a combustion chamber with a recess formed on the top surface of a piston.

A combustion chamber structure as a prior art of the in-cylinder fuel injection type engine has been disclosed in a publication of the Japanese laid-open patent application No. Hei-9-144544.

According to the above publication, an engine is constituted that: a cylinder comprises; a cylinder body having a cylinder bore, and a cylinder head placed on the upper end of the cylinder body when the cylinder body axis is positioned upright, a recess is formed on the top surface of a piston inserted in the cylinder bore, the space inside the cylinder bore between the cylinder head and the piston is made a combustion chamber, an intake passage and an exhaust passage are formed in the cylinder head to make intercommunication between inside and outside of the combustion chamber, a fuel injection valve having a fuel injection nozzle capable of injecting fuel to the combustion chamber is provided, and an ignition plug with its electric discharge portion located in the upper end part of the combustion chamber is provided.

When the engine is operated, air is introduced during a suction stroke from outside through the intake passage into the combustion chamber, fuel is injected during a suction and/or compression stroke, and air and fuel are mixed together to produce mixture in the combustion chamber.

In the above manner, when the fuel injection valve injects fuel into the recess, rich mixture produced in the recess is guided along the inside surface of the recess, sent toward the electric discharge portion of the ignition plug, and reliably ignited with the electric discharge portion (stratified combustion).

After the ignition, the flame propagates to the entire mixture in the combustion chamber to bum the mixture in an expansion stroke. Thermal energy produced by the combustion is converted into kinetic energy or power which is outputted through the crankshaft of the engine.

Burned gas produced by the combustion is discharged outside through the exhaust passage in an exhaust stroke.

The above strokes are thereafter repeated in succession to continue operation of the engine and to utilize the output of the engine.

According to the conventional technique described above, the electric discharge portion of the ignition plug is located at a radially outside edge of the combustion chamber as seen in plan view of the cylinder and it is possible that the propagation of flame over the entire mixture takes some period of time.

Therefore, it is conceivable to place the electric discharge portion near the center of the combustion chamber so that the flame propagates rapidly relative to the entire mixture in the combustion chamber.

However, when the electric discharge portion is placed near the center of the combustion chamber, it might be difficult to accurately guide and send the rich mixture produced as injected from the injection valve along the recess to the electric discharge portion, and might lead to poor igniting property of the mixture.

Therefore, it can be devised to make the recess deeper, to produce rich mixture by injecting fuel to the recess, and to guide the mixture more reliably to the electric discharge portion.

However, when the recess is made deeper simply as described above, another problem of engine performance arises: the volume of the recess increases and the volume of the combustion chamber increases when the piston reaches its top dead center, and accordingly the compression ratio of the engine decreases.

Another example is disclosed in the publication FR-2 778 432 however overflowing of the mixture out of the recess can occur.

it is an objective of the present invention to provide an internal combustion engine of an in-cylinder fuel injection type having a reliable ignition and high performance.

According to the invention said objective is solved by an internal combustion engine of an in-cylinder fuel injection type according to claim 1.

It is a special advantage of the present invention to provide an engine keeping favorable mixture igniting property in the engine combustion chamber, causing rapid propagation of flame over the entire mixture in the engine combustion chamber, and assuring favorable engine performance by realizing a high compression ratio.

Preferred embodiments of the present invention are laid down in dependent claims.

In the following, the present invention is explained in greater detail with respect to s everal embodiments thereof in conjunction with the accompanying drawings, wherein:
FIG. 1 shows a schematic, drawing line plan view of a cylinder of an engine;
FIG. 2 is a side view in cross section of the engine;
FIG. 3 is a partially enlarged view of FIG. 2;
FIG. 4 shows a cross section as seen along the arrow 4-4 in FIG. 3; and
FIG. 5 corresponds to FIG. 1 and shows another embodiment.

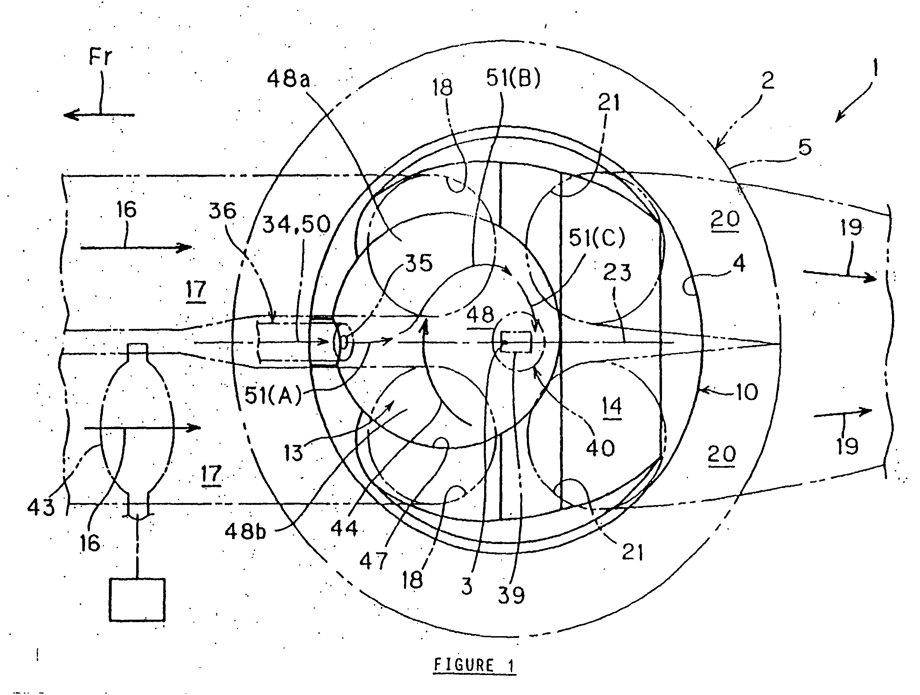

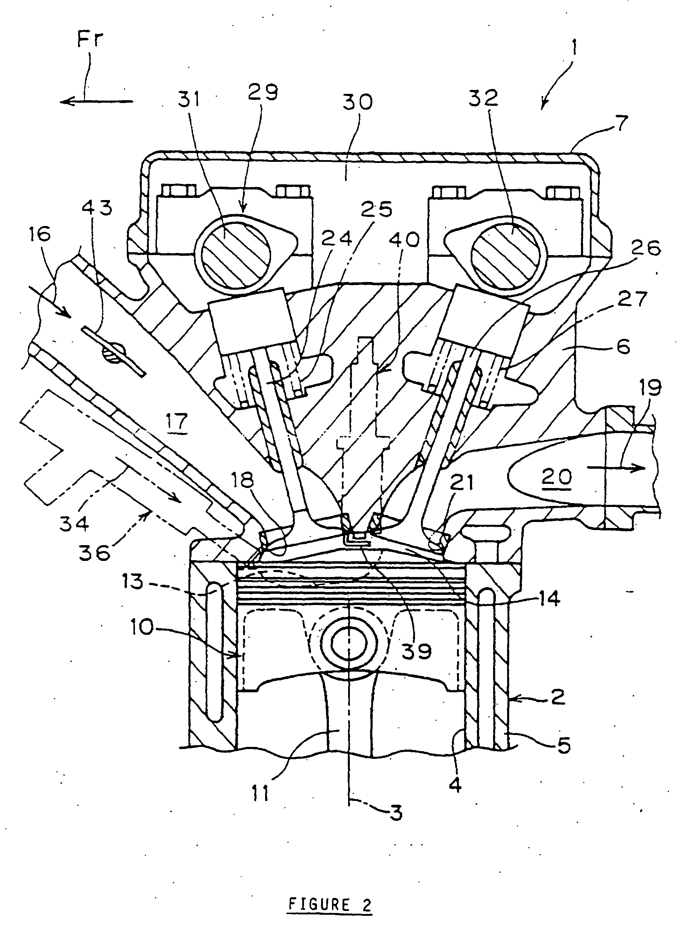

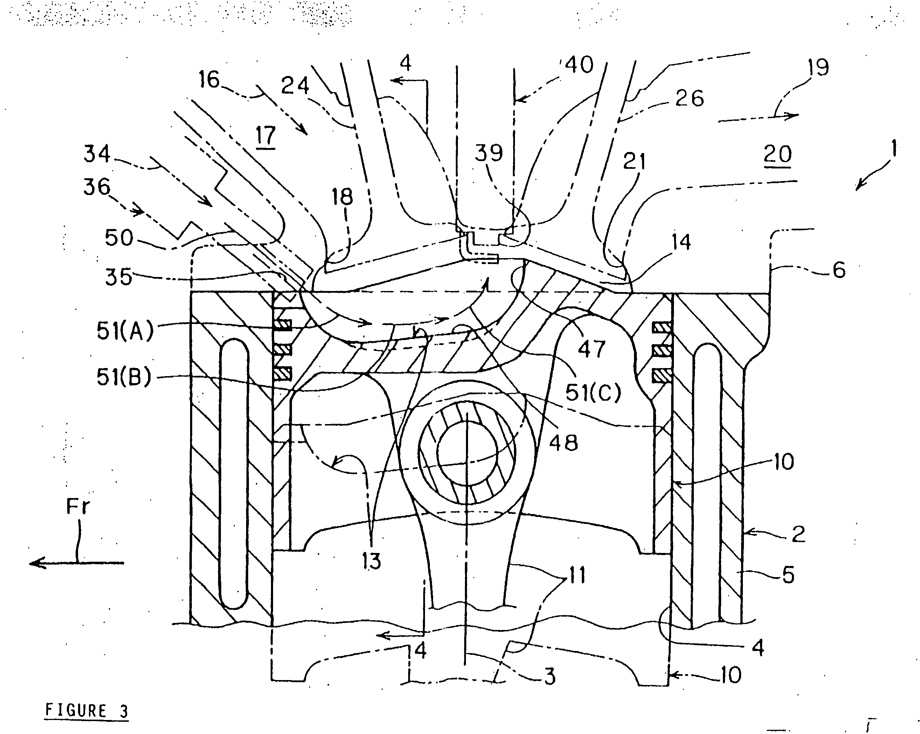

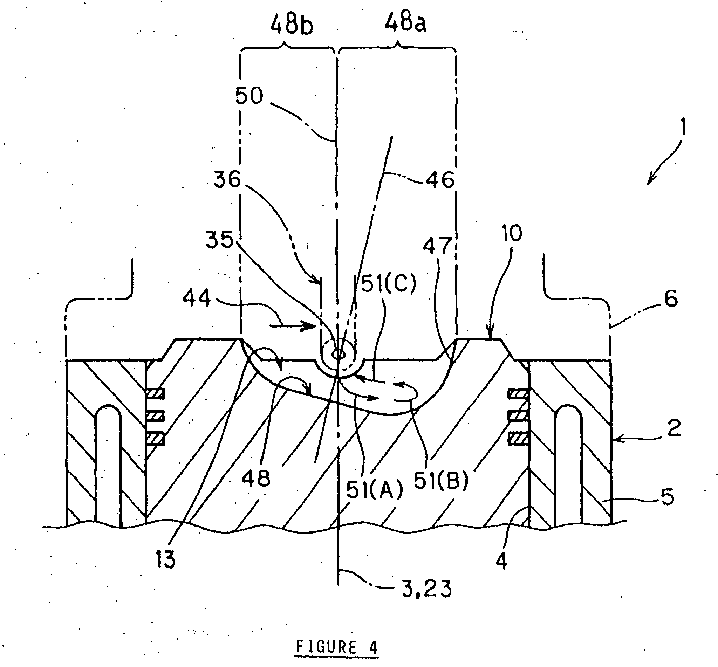

In FIGs. 1 - 4 is shown an internal combustion engine 1 of the four-stroke cycle type. For the sake of convenience of explanation, the direction of the arrow Fr is assumed to be the front, and the terms right and left are meant as horizontal as seen in the front direction.

The engine 1 comprises a crankcase supporting a crankshaft (not shown), with its axis extending right and left, and a cylinder 2 rising upright from the crankcase. The cylinder 2 comprises a cylinder body 5 having a cylinder bore 4 with its axis 3 extending in vertical direction, a cylinder head 6 placed on the upper end of the cylinder body 5 to close the upper end of the cylinder bore 4, and a cylinder head cover 7 attached to the cylinder head 6 to cover the top surface of the cylinder head 6.

The engine 1 is provided with a piston 10 inserted for free axial sliding along the axis 3 in the cylinder bore 4, and a connecting rod 11 interconnecting the crankshaft and the piston 10.

A recess 13 is formed on the top surface of the piston 10. A space inside the cylinder bore 4 including the recess 13 between the top surface of the piston 10 and the underside of the cylinder head 6 is made a combustion chamber 14.

The cylinder head 6 is formed with paired right and left (plural) intake passages 17, 17 making communication between the front upper outside of the cylinder head 6 and the front part of the combustion chamber 14 to introduce air 16 from outside the engine 1. The intake passages 17, 17 are open to the combustion chamber 14 at intake openings 18, 18.

The cylinder head 6 is also formed with paired right and left (plural) exhaust passages 20, 20 making communication between the rear upper of the cylinder head 6 and the rear part of the combustion chamber 14 to lead out exhaust 19 in the combustion chamber 14 to the outside of the engine 1. The exhaust passages 20, 20 are open to the combustion chamber 14 at exhaust openings 21, 21.

In the plan view (FIG. 1) of the cylinder 2, the intake passages 17, intake openings 18, exhaust passages 20, and exhaust openings 21 are disposed respectively generally symmetrically on both sides of an imaginary line 23 extending in the front-rear direction passing through the axis 3. The center of the recess 13 is located approximately on the imaginary line 23.

Intake valves 24 for opening and closing the intake openings 18 are supported through the cylinder head 6 and forced with springs 25 to close the intake openings 18. Exhaust valves 26 for opening and closing the exhaust openings 21 are supported through the cylinder head 6 and forced with springs 27 to close the exhaust openings 21.

A valve drive mechanism 29 is provided to open the intake valves 24 and the exhaust valves 26 at specified crank angles against the closing forces of the springs 25 and 27 in interlocked motion with the crankshaft. The valve drive mechanism 29 comprises a valve drive chamber 30 formed between the cylinder head 6 and the cylinder head cover 7, an intake camshaft 31 and an exhaust camshaft 32 housed in the valve drive chamber 30 for interlocked movement with the crankshaft. The intake camshaft 31 engages with the intake valves 24 through cams, and the exhaust camshaft 32 engages with the exhaust valves 26 through cams.

The intake openings 18 and the exhaust openings 21 are arranged to be opened and closed respectively at specified crank angles as the intake valves 24 and the exhaust valves 26 are opened and closed with the springs 25, 27, and the intake and exhaust camshafts 31, 32 in interlocked motion with the crankshaft.

Although not shown, a means for adjusting the valve opening motion starting time for making adjustable the time point of starting to open the valves 24 without changing the valve open duration is provided.

A fuel injection valve 36 having a fuel injection nozzle 35 being capable of injecting fuel 34 from above into the combustion chamber 14 is provided as installed in the cylinder head 6.

An ignition plug 40 is attached to the cylinder head 6 so that the ignition plug 40 with the electric discharge portion 39 is located in the upper end part of the combustion chamber 14.

An air control valve 43 is provided to make adjustable the amount of air 16 flowing to the combustion chamber 14 by making adjustable the cross-sectional area of part, in the longitudinal direction, of one (left) of the right and left intake passages 17, 17. By the closing action the air control valve 43, the amount of air 16 flowing through one (left) of the right and left intake passages 17, 17 is made greater than the amount of air 16 flowing through the other (right) intake passage 17, so that the air 16 drawn into the combustion chamber 14 through the right and left intake passages 17, 17 creates a swirl 44 moving in one direction, clockwise about the axis 3 of the cylinder bore 4 as seen in plan view of the cylinder 2.

The recess 13, as seen in plan view (FIG. 1) of the cylinder 2, is formed generally in a circular shape (including ellipsis) and located on the front side rather than the rear side of the top surface of the piston 10.

The recess 13 is formed in a bottomed, approximately cylindrical, hollow shape having another axis 46 tilted relative to the axis 3 of the cylinder bore 4. The inside surface of the recess 13 comprises a ring-shaped inside surface 47 extending circularly about the axis 46 and a bottom surface 48 extending generally flat at right angles to the axis 46. Therefore, the bottom surface 48 is tilted relative to the axis 3 of the cylinder bore 4.

The axis 50 of the fuel injection nozzle 35 of the fuel injection valve 36 is positioned on the imaginary line 23 as seen in plan view (FIG. 1) of the cylinder 2. The fuel injection nozzle 35 is arranged to be capable of injecting fuel 34 from the front to the combustion chamber 14 and that to the recess 13.

The electric discharge portion 39 of the ignition plug 40 is located approximately on the axis 3 of the cylinder bore 4 as seen in plan view of the cylinder 2 (FIG. 1) and that in the rear end part of the recess 13.

Of the bottom surface 48 of the recess 13, one bottom surface portion 48a over which the swirl 44 flows away from the injection nozzle 35 is made deeper than the other bottom surface portion 48b over which the swirl 44 turns back toward the injection nozzle 35 in reference to the top surface of the piston 10.

When the engine 1 is operated, first in the suction stroke in which the intake valves 24 open, air 16 is drawn through the intake passages 17, 17 into the cylinder bore 4. At this time, if a closing action of the intake control valve 43 reduces the cross-sectional area of one (left) of the intake passages 17, the swirl 44 is created as described above in the cylinder bore 4.

On the other hand, in a suction stroke and/or an ensuing compression stroke, fuel 34 is injected for a certain injection (crank angle) duration through the injection nozzle 35 by means of the injection valve 36, so that rich mixture 51 is produced in the recess 13.

Next, the combustion stroke occurs as the mixture 51 is ignited by electric discharge at the electric discharge portion 39 and burned by the propagation of flame.

Burned gas produced by combustion is discharged outside through the exhaust passages 20, 20 as the exhaust valves 26 open in an exhaust stroke.

Thereafter, the engine 1 continues to run as the above strokes are repeated in succession.

The process of injecting fuel 34 through the fuel injection nozzle 35 by means of the fuel injection valve 36 in the above-mentioned suction stroke and/or an ensuing compression stroke will be hereinafter describe more in detail.

Fuel 34 is injected to the recess 13 of the combustion chamber 14 during part of the duration of the injection, in particular during the period in which the piston 10 is near its top dead center, by means of the fuel injection valve 36 to produce rich mixture 51 in the recess 13.

In reference to a plan view (FIG. 1) of the cylinder 2, rich mixture 51 (A) produced with the fuel 34 immediately after being injected from the fuel injection nozzle 35 tends to move rearward (toward the axis 3 of the cylinder 2 and the electric discharge section 39) along the axis 50 of the fuel injection nozzle 35 and the imaginary line 23. However, the mixture 51 (A) is pushed with part of the air flow of the swirl 44 and sent from the fuel injection nozzle 35 side to the downstream side of the swirl 44. The mixture 51 (B) is sent to one side portion (right hand portion) of the inside circumferential surface 47 in the recess 13.

Also in plan view (FIG. 1) of the cylinder 2, the mixture 51 (B) sent toward one side portion of the inside circumferential surface 47 is made to flow rearward as guided with the one side portion of the inside circumferential surface 47. The mixture 51 (C) moved further toward the rear is guided with the rear portion of the inside circumferential surface 47 and is made to flow from the one (right) side to the other (left) side of the inside circumferential surface 47. As a result, the mixture 51 (C) is caused to move toward the electric discharge portion 39 located in the rear end portion of the recess 13.

Here in the recess 13, one bottom surface portion 48a over which the swirl 44 flows away from the injection nozzle 35 is made deeper than the other bottom surface portion 48b over which the swirl 44 turns back toward the injection nozzle 35.

Owing to this, the mixture 51 (A-C) produced with fuel 34 injected from the fuel injection nozzle 35 is pushed with the swirl 44 to move toward the one bottom surface portion 48a as described above to securely collect rich mixture 51 (A-C) in part of the recess 13 on the side of the one bottom surface portion 48a and the mixture is restricted from overflowing out of the recess 13. As a result, the mixture 51(C) while remaining in the rich state is guided with the inside circumferential surface 47 of the recess 13 to flow toward the electric discharge portion 39.

Moreover, as described above, the one bottom surface portion 48a is formed deeper than the other bottom surface portion 48b. In other words, the other bottom surface portion 48b is formed shallower than the one bottom surface portion 48a.

Therefore as described above, the mixture 51 (C) in the recess 13 is guided with the rear part of the inside circumferential surface 47 and sent from one side (right hand) portion to the other side (left hand) portion of the inside circumferential surface 47. At this time, when the mixture 51(C) is sent from the one side bottom surface portion 48a to the other side bottom surface portion 48b, the mixture 51(C) rises while being guided in succession with the one bottom surface portion 48a and the other bottom surface portion 48b. As a result, the mixture 51 (C) is sent toward the electric discharge portion 39 located in the upper end portion of the combustion chamber 14.

As a result, the mixture 51(C), while being maintained in rich state, is guided with the inside circumferential surface 47, the one bottom surface portion 48a and the other bottom surface portion 48b both constituting the bottom surface 48, is securely three-dimensionally sent toward the electric discharge portion 39, and the igniting property of the mixture 51 with the electric discharge portion 39 is favorably maintained.

Also as described above, since the mixture 51 (C) is securely sent toward the electric discharge portion 39, the projecting dimension of the electric discharge portion 39 into the combustion chamber 14 can be reduced, which prevents the temperature of the electric discharge portion 39 from rising extremely and is favorable for the durability of the electric discharge portion 39.

In the above arrangement, since the recess 13 is located in the front part of the top surface of the piston 10, and the electric discharge portion 39 is located near the rear edge of the piston 10, the electric discharge portion 39 results in being placed approximately in the center of the combustion chamber 14, as seen in plan view of the cylinder 2.

Therefore, when the mixture 51 (C) is ignited with the electric discharge portion 39, flame propagation through the mixture 51 (C) in the entire combustion chamber 14 is faster than in an arrangement in which the electric discharge portion 39 is located on a radially outside edge of the combustion chamber 14, which is favorable for the performance of the engine.

In the above arrangement, the other bottom surface portion 48b of the bottom surface 48 in the recess 13 is formed shallower than the one bottom surface portion 48a.

As a result, the volume of the recess 13 is held small in comparison with an arrangement in which the entire bottom surface 48 is made deep, and the volume of the combustion chamber 14 when the piston 10 reaches its top dead center is held small.

Therefore, the compression ratio of the engine 1 can be increased accordingly, which is favorable for the engine performance.

Also as described above, almost entire bottom surface 48 of the recess 13 is formed generally flat.

Therefore, in the recess 13, when the mixture 51 (C) is guided with the rear part of the inside circumferential surface 47 and sent from one side (right hand) portion to the other side (left hand) portion of the inside circumferential surface 47, namely from the one bottom portion 48a side to the other bottom surface portion 48b side, the guiding is made smoothly with generally flat bottom surface 48 constituted with the one bottom portion 48a and the other bottom portion 48b, so that the mixture 51 (C) rises smoothly.

Since the mixture 51 (C) is reliably sent to the electric discharge portion 39 located in the upper end portion of the combustion chamber 14, the igniting property of the mixture 51 with the electric discharge portion 39 is further improved.

As already described before, the recess 13 is also formed in a bottomed, approximately cylindrical, hollow shape having another axis 46 tilted relative to the axis 3 of the cylinder bore 4.

Therefore, the shape of the recess 13 is simple and accordingly the constitution of the combustion chamber 14 is simple, and its manufacture becomes easy.

While the above description is made in reference to the example shown in the appended figures, the axis 3 of the cylinder bore 4 of the engine 1 may be tilted from the vertical axis, or may be horizontal.

The recess 13 may also be formed in an inverted, generally truncated hollow cone shape.

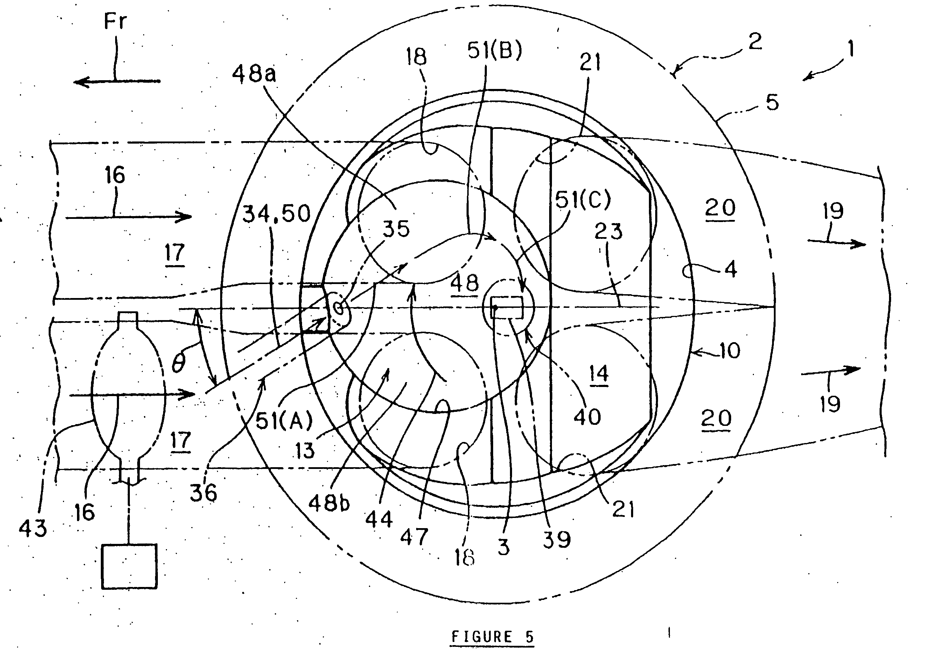

FIG. 5 shows another embodiment.

With this embodiment, when an imaginary line 23 is assumed to interconnect the fuel injection nozzle 35 and the axis 3 of the cylinder bore 4 in plan view (FIG. 5) of the cylinder 2, the direction of injecting fuel 34 from the fuel injection nozzle 35, namely the axis 50 of the fuel injection nozzle 35 is tilted to one (right hand) side by an acute angle (θ) relative to the imaginary line 23.

The bottom surface portion 48a of one bottom surface 48 in the recess 13 on one (right hand) side of the imaginary line 23 is made deeper than the other bottom surface portion 48b of the bottom surface 48 on the other (left hand) side.

When fuel 34 is injected from the fuel injection nozzle 35, rich mixture 51(A) produced with fuel 34 immediately after being injected is sent, as seen in plan view (FIG. 5) of the cylinder 2, along the axis 50 of the fuel injection nozzle 35 toward one (right hand) side of the inside circumferential surface 47 of the recess 13.

Since other constitutions and effects are the same as those of the above-described embodiments, the same symbols are given to the same or equivalent components and their explanations are omitted.

Incidentally, this embodiment may also be arranged without the swirl 44. Still alternatively, as described above, the direction of injecting fuel 34 from the fuel injection nozzle 35 may be tilted, in plan view of the cylinder 2 as described above, to one side by an acute angle (θ) relative to the imaginary line 23 assumed to interconnect the axis 3 of the cylinder bore 4 and the fuel injection nozzle 35, while leaving unchanged the attachment attitude of the fuel injection valve 36 as in the previous embodiment.

The combustion chamber structure of an engine constituted as shown in FIGs. 1 - 4 comprises a cylinder 2 with a cylinder body 5 having a cylinder bore 4, and a cylinder head 6 placed on the upper end of the cylinder body 5 when the cylinder body axis 3 is positioned upright, a recess 13 is formed on the top surface of a piston 10 inserted in the cylinder bore 4, the space inside the cylinder bore 4 between the cylinder head 6 and the piston 10 is made a combustion chamber 14, an intake passage 17 and an exhaust passage 20 are formed in the cylinder head 6 to make intercommunication between inside and outside of the combustion chamber 14, a fuel injection valve 36 having a fuel injection nozzle 35 capable of injecting fuel 34 to the combustion chamber 14 is provided, and an ignition plug 40 with its electric discharge portion 39 located in the upper end part of the combustion chamber 14 is provided.

It is arranged that air 16 drawn through the intake passage 17 into the combustion chamber 14 becomes a swirl 44 moving in one direction about the axis 3 of the cylinder bore 4.

It is also arranged that the recess 13 is formed generally circular in plan view of the cylinder 2 and is located in the top surface of the front part of the piston 10 when one radial direction of the cylinder 2 is defined as front, the fuel injection nozzle 35 is made capable of injecting fuel 34 from a front upper side of the combustion chamber 14 to the recess 13, and the electric discharge portion 39 is located in the rear part of the recess 13.

It is also arranged that, of the bottom surface 48 of the recess 13, one bottom surface portion 48a over which the swirl 44 flows away from the injection nozzle 35 is made deeper than the other bottom surface portion 48b over which the swirl 44 turns back toward the injection nozzle 35.

As a result, rich mixture produced with fuel immediately after being injected from the fuel injection nozzle tends to move rearward as seen in plan view of the cylinder along the axis of the injection nozzle. However, the mixture is pushed with part of air flow of the swirl and sent toward the downstream side from the fuel injection nozzle side, and caused to flow toward one (right hand) side of the inside circumferential surface of the recess.

The mixture caused to flow toward one side in plan view of the cylinder of the inside circumferential surface as described above is guided with the one side of the inside circumferential surface and caused to flow rearward. The mixture caused to flow rearward in this way is guided to the rear part of the inside circumferential surface and sent from one side to the other side of the inside circumferential surface. As a result, the mixture is sent toward the electric discharge portion located in the rear end part of the recess.

Here in the recess, one bottom surface portion on the side where the swirl is moving away from the fuel injection nozzle is made deeper than the other bottom surface portion on the side where the swirl is moving toward the fuel injection nozzle.

Owing to this, the mixture produced with fuel injected from the fuel injection nozzle is pushed with the swirl to move toward the one bottom surface portion as described above to securely collect rich mixture in part of the recess on the side of the one bottom surface portion and the mixture is restricted from overflowing out of the recess. As a result, the mixture while remaining in the rich state is guided with the inside circumferential surface of the recess to flow toward the electric discharge portion.

Moreover, as described above, the one bottom surface portion is formed deeper than the other bottom surface portion. In other words, the other bottom surface portion is formed shallower than the one bottom surface portion.

Therefore as described above, the mixture in the recess is guided with the rear part of the inside circumferential surface and sent from one side portion to the other side portion of the inside circumferential surface. At this time, when the mixture is sent from one side portion to the other side portion of the bottom surface, the mixture rises while being guided with the one side portion and the other side portion of the bottom surface in succession. As a result, the mixture is sent toward the electric discharge portion located in the upper end part of the combustion chamber.

As a result, the mixture, while being maintained in rich state, is guided with the inside circumferential surface of the recess, the one bottom surface portion and the other bottom surface portion both constituting the bottom surface, is securely three-dimensionally sent toward the electric discharge portion, and the igniting property of the mixture with the electric discharge portion is favorably maintained.

Also as described above, since the mixture is securely sent toward the electric discharge portion, the projecting dimension of the electric discharge portion into the combustion chamber can be reduced accordingly, which prevents the temperature of the electric discharge portion from rising extremely, and is favorable for the durability of the electric discharge portion.

In the above arrangement, since the recess is located in the front part of the top surface of the piston and the electric discharge portion is located near the rear edge of the recess, the electric discharge portion results in being placed approximately in the center of the combustion chamber as seen in plan view of the cylinder.

Therefore, when the mixture is ignited with the electric discharge portion, flame propagation through the mixture in the entire combustion chamber is faster than in an arrangement in which the electric discharge portion is located on a radially outside edge of the combustion chamber, and is favorable for the performance of the engine.

In the above arrangement, the other bottom surface portion of the bottom surface in the recess is formed shallower than the one bottom surface portion.

As a result, the volume of the recess is held small in comparison with an arrangement in which the entire bottom surface is made deep, and the volume of the combustion chamber when the piston reaches its top dead center is held small.

Therefore, the compression ratio of the engine can be increased accordingly, which is favorable for the engine performance.

An engine constituted as shown in particular in FIG. 5 comprises: a cylinder 2 with a cylinder body 5 having a cylinder bore 4, and a cylinder head 6 placed on the upper end of the cylinder body 5 when the axis 3 of the cylinder bore 4 is positioned upright, a recess 13 is formed on the top surface of a piston 10 inserted in the cylinder bore 4, the space inside the cylinder bore 4 between the cylinder head 6 and the piston 10 is made a combustion chamber 14, an intake passage 17 and an exhaust passage 20 are formed in the cylinder head 6 to make intercommunication between inside and outside of the combustion chamber 14, a fuel injection valve 36 having a fuel injection nozzle 35 capable of injecting fuel 34 to the combustion chamber 14 is provided, and an ignition plug 40 with its electric discharge portion 39 located in the upper end part of the combustion chamber 14 is provided.

It is arranged that the recess 13 is formed generally circular in plan view of the cylinder 2 and is located in the front part of the top surface of the piston 10 when one radial direction of the cylinder 2 is defined as front, the fuel injection nozzle 35 is made capable of injecting fuel 34 from the front upper side of the combustion chamber 14 to the recess 13, and the electric discharge portion 39 is located in the rear part of the recess 13.

It is also arranged that the injecting direction of fuel 34 from the injection nozzle 35 is tilted to one side by an acute angle (θ) in plan view of the cylinder 2 relative to an imaginary line 23 interconnecting the axis 3 of the cylinder bore 4 and the fuel injection nozzle 35, and one bottom surface portion 48a in the bottom surface 48 of the recess 13 on said one side relative to the imaginary line 23 is made deeper than the other bottom surface portion 48b in the bottom surface 48 on said other side.

Therefore, without the swirl effect, in plan view of the cylinder, rich mixture produced with fuel immediately after being injected from the fuel injection nozzle is sent along the axis of the fuel injection nozzle toward the one (right hand) side of the inside circumferential surface of the recess. Other effects are the same as those obtained with the arrangement according the first embodiment.

As exemplified in all the drawings, almost entire bottom surface 48 of the recess 13 is formed flat.

Therefore, in the recess, when the mixture is guided with the rear part of the inside circumferential surface and sent from one side portion to the other side portion of the inside circumferential surface, namely from one side portion to the other side portion of the bottom surface, the guiding is made smoothly with generally flat bottom surface constituted with the one side and the other side bottom surface portions, so that the mixture rises smoothly.

Since the mixture is reliably sent to the electric discharge portion located in the upper end portion of the combustion chamber, the igniting property of the mixture with the electric discharge portion is further improved.

As exemplified in all the drawings, the recess 13 is formed in a bottomed, generally cylindrical hollow shape or inverted, generally truncated cone hollow shape having another axis 46 tilted relative to the axis 3 of the cylinder bore 4.

Therefore, the shape of the recess is simple and accordingly the constitution of the combustion chamber is simple, and its forming process becomes easy.

The above mentioned embodiments are showing an internal combustion engine of an in-cylinder fuel injection type with at least one piston 10 provided within a cylinder bore 4 having a cylinder bore axis 3. A recess 13 is provided on a top surface of the piston 10. Said recess 13 extends from a first to a second section thereof and an imaginary line 23 in said extension direction is defining a first side of said recess 13 and a second side of said recess 13. A fuel injection nozzle 35 is facing said first section of the recess 13 and is provided for injecting fuel 34 towards said recess 13 and an ignition plug 40 is facing a second section of said recess 13.

A bottom surface portion 48a of the recess 13 at said first side is deeper in a direction of the cylinder bore axis 3 than a bottom surface portion 48b of the recess 13 at said second side.

Said recess 13 is formed generally circular in cross section perpendicular to the cylinder bore axis 3. Said recess 13 comprises an side surface 47 and a bottom surface 48 formed by said bottom surface portions 48a,48b and the fuel injection nozzle 35 is provided for injecting fuel 34 towards the bottom surface 48 of said recess 13.

Said imaginary line 23 extends through said fuel injection nozzle 35 and said cylinder bore axis 3. Said electric discharge portion 39 is provided at or close to said cylinder bore axis 3.

The bottom surface portions 48a,48a of the recess 13 are substantially flat shaped within a common plan.

As can be taken from the first embodiment said engine comprises an air swirl generating means 43 which is provided for generating a swirl 44 of intake air within the combustion chamber 14 in one direction substantially about the cylinder bore axis 3. Said air swirl generating means 43 is provided for generating a swirl 44 which flows away from the fuel injection nozzle 35 over the bottom surface portion 48a of the recess 13 at said first side and turns back over the bottom surface portion 48b of the recess 13 at said second side. Within said embodiment the fuel injection nozzle 35 is provided for injecting fuel 34 along the extension direction of the imaginary line 23.

As can be taken from the second embodiment said fuel injection nozzle 35 is provided for injecting fuel 34 towards said first side of said recess 13 having the bottom surface portion 48a of the recess 13 which is deeper in than a bottom surface portion 48b of the recess 13 at said second side. Such a fuel injection nozzle can be used also in combination with the features of the first embodiment, especially with an air swirl generating means.

According to the embodiments, the recess 13 is formed in a bottomed, generally cylindrical hollow shape or inverted, generally truncated cone hollow shape, wherein an axis 46 of the recess 13 is tilted relative to the cylinder bore axis 3.

According to the embodiments said engine is a multi-valve engine with two air intake openings 18 facing said recess 13, one of said openings 18 is associated with said first side of said recess 13 and another opening is associated with said second side of said recess 13. Said opening 18 associated with said second side of said recess 13 is connected with in intake passage 17 which is provided with an air control valve 43. Said fuel injection valve 36 is provided within a plane between said two openings 18.

Said embodiments teaches an internal combustion engine, wherein a cylinder head 6 of said engine, said top surface of said piston 10, said recess 13 and said cylinder bore 4 are defining a combustion camber 14. Said combustion chamber 14 is dome-shaped with a projecting portion at the top surface of said piston 10. A central section of said projecting portion is facing the cylinder head 6 between intake and exhaust valves of the engine, wherein said second section of the recess 13 is provided at the central section of said projecting portion.

## Claims

1. Internal combustion engine of an in-cylinder fuel injection type with at least one piston (10) provided within a cylinder bore (4) having a cylinder bore axis (3), said piston (10) has pent roof shape, a recess (13) which is provided on a top surface of the piston (10); said recess (13) extends from a first to a second section thereof and an imaginary line (23) in said extension direction is defining a first side of said recess (13) and a second side of said recess (13), a fuel injection nozzle (35) is facing said first section of the recess (13) and is provided for injecting fuel (34) towards said recess (13) and an ignition plug (40) is facing a second section of said recess (13), an electric discharge portion (39) of said ignition plug (40) is provided at or close to said cylinder bore axis (3), wherein bottom surface portions (48a,48a) of said recess (13) are substantially flat-shaped within a common plan and the a bottom surface portion (48a) of the recess (13) at said first side is deeper in a direction of the cylinder bore axis (3) than a bottom surface portion (48b) of the recess (13) at said second side, said recess (13) comprises a side surface (47) for guiding an air/fuel mixture (51A-C), wherein said side surface (47) has a rear part at a summit of the pent roof of the piston (10) to restrict the mixture (51 A-C) from overflowing out of the recess (13).

2. Internal combustion engine according to claim 1, wherein the recess (13) is formed generally circular in cross section perpendicular to the cylinder bore axis (3).

3. Internal combustion engine according to claim 1 or 2, wherein said recess (13) comprises an side surface (47) and a bottom surface (48) formed by said bottom surface portions (48a,48b) and the fuel injection nozzle (35) is provided for injecting fuel (34) towards the bottom surface (48) of said recess (13).

4. Internal combustion engine according to at least one of the claims 1 to 3, wherein said imaginary line (23) extends through said fuel injection nozzle (35) and said cylinder bore axis (3).

5. Internal combustion engine according to at least one of the claims 1 to 4, wherein said electric discharge portion (39) is provided at or close to said cylinder bore axis (3).

6. Internal combustion engine according to at least one of the claims 1 to 5, wherein the bottom surface portions (48a,48a) of the recess (13) are substantially flat shaped within a common plan.

7. Internal combustion engine according to at least one of the claims 1 to 6, wherein an air swirl generating means (43) is provided for generating a swirl (44) of intake air within the combustion chamber (14) in one direction substantially about the cylinder bore axis (3).

8. Internal combustion engine according claim 7, wherein said air swirl generating means (43) is provided for generating a swirl (44) which flows away from the fuel injection nozzle (35) over the bottom surface portion (48a) of the recess (13) at said first side and turns back over the bottom surface portion (48b) of the recess (13) at said second side.

9. Internal combustion engine according to at least one of the claims 1 to 8, wherein the fuel injection nozzle (35) is provided for injecting fuel (34) towards said first side of said recess (13) having the bottom surface portion (48a) of the recess (13) which is deeper in than a bottom surface portion (48b) of the recess (13) at said second side.

10. Internal combustion engine according to claim 7 or 8, wherein the fuel injection nozzle (35) is provided for injecting fuel (34) along the extension direction of the imaginary line (23).

11. Internal combustion engine according to at least one of the claims 1 to 10, wherein the recess (13) is formed in a bottomed, generally cylindrical hollow shape or inverted, generally truncated cone hollow shape, wherein an axis (46) of the recess (13) is tilted relative to the cylinder bore axis (3).

12. Internal combustion engine according to at least one of the claims 1 to 11, wherein said engine is a multi-valve engine with at least two air intake openings (18) facing said recess (13), at least one of said openings (18) is associated with said first side of said recess (13) and at least another opening is associated with said second side of said recess (13).

13. Internal combustion engine according to claim 12, wherein at least said opening (18) associated with said second side of said recess (13) is connected with in intake passage (17) which is provided with an air control valve (43).

14. Internal combustion engine according to claim 12 or 13, wherein said fuel injection valve (36) is provided within a plane between said two openings (18).

15. Internal combustion engine according to at least one of the claims 1 to 14, wherein a cylinder head (6) of said engine, said top surface of said piston (10), said recess (13) and said cylinder bore (4) are defining a combustion camber (14); said combustion chamber (14) is dome-shaped with a projecting portion at the top surface of said piston (10), a central section of said projecting portion is facing the cylinder head (6) between intake and exhaust valves of the engine, wherein said second section of the recess (13) is provided at the central section of said projecting portion.

## Patentansprüche

1. Brennkraftmaschine eines In- Zylinder- Kraftstoffeinspritztyps mit zumindest einem Kolben (10), vorgesehen innerhalb einer Zylinderbohrung (4), die eine Zylinderbohrungsachse (3) hat, wobei der Kolben (10) eine nach innen geneigte Dachform hat, eine Aussparung (13), die auf einer Oberseitenoberfläche des Kolbens (10) vorgesehen ist; wobei sich die Aussparung (13) von einem ersten zu einem zweiten Abschnitt derselben erstreckt und eine gedachte Linie (23) in der Erstreckungsrichtung eine erste Seite der Aussparung (13) und eine zweite Seite der Aussparung (13) bildet, eine Kraftstoffeinspritzdüse (35) dem ersten Abschnitt der Aussparung (13) zugewandt ist und vorgesehen ist zum Einspritzen von Kraftstoff (34) in Richtung der Aussparung (13) und eine Zündkerze (40) einem zweiten Abschnitt der Aussparung (13) zugewandt ist, ein elektrischer Entladungsabschnitt (39) der Zündkerze (40) an oder in der Nähe der Zylinderbohrungsachse (3) vorgesehen ist, wobei die Bodenoberflächenabschnitte (48a, 48a) der Aussparung (13) im Wesentlichen innerhalb einer gemeinsamen Ebene flachförmig sind und der eine Bodenoberflächenabschnitt (48a) der Aussparung (13) auf der ersten Seite in einer Richtung der Zylinderbohrungsachse (3) tiefer als ein Bodenoberflächenabschnitt (48a) der Aussparung (13) auf der zweiten Seite ist, wobei die Aussparung (13) eine Seitenoberfläche (47) zum Leiten eines Luftkraftstoffgemisches (51A - C) aufweist, wobei die Seitenoberfläche (47) eine hinteren Teil an einem Scheitel des nach innen geneigte Dachs des Kolbens (10) hat, um das Gemisch (51A - C) vom Überströmen aus der Aussparung (13) heraus zu begrenzen.

2. Brennkraftmaschine nach Anspruch 1, wobei die Aussparung (13) im Wesentlichen kreisförmig im Querschnitt und rechtwinklig zu der Zylinderbohrungsachse (3) gebildet ist.

3. Brennkraftmaschine nach Anspruch 1 oder 2, wobei die Aussparung (13) eine Seitenoberfläche (47) und eine Bodenoberfläche (48), gebildet durch die Bodenoberflächenabschnitte (48a. 48a), aufweist und die Kraftstoffeinspritzdüse (35) zum Einspritzen von Kraftstoff in Richtung zu der Bodenoberfläche (48) der Aussparung (13) vorgesehen ist.

4. Brennkraftmaschine nach zumindest einem der Ansprüche 1 bis 3, wobei die gedachte Linie (23) sich durch die Kraftstoffeinspritzdüse (35) und die Zylinderbohrungsachse (3) erstreckt.

5. Brennkraftmaschine nach zumindest einem der Ansprüche 1 bis 4, wobei der elektrische Entladungsabschnitt (39) an oder in der Nähe der Zylinderbohrungsachse (3) vorgesehen ist.

6. Brennkraftmaschine nach zumindest einem der Ansprüche 1 bis 5, wobei die Bodenoberflächenabschnitte (48a, 48a) der Aussparung (13) im Wesentlichen innerhalb einer gemeinsamen Ebene flachförmig sind.

7. Brennkraftmaschine nach zumindest einem der Ansprüche 1 bis 6, wobei eine Luft- Wirbelerzeugungseinrichtung (43) zum Erzeugen eines Wirbels der Einlassluft innerhalb der Brennkammer (14) in einer Richtung im Wesentlichen um die Zylinderbohrungsachse (3), vorgesehen ist.

8. Brennkraftmaschine nach Anspruch 7, wobei die Luft- Wirbelerzeugungseinrichtung (43) vorgesehen ist für die Erzeugung eines Wirbels (44), der wegströmt von der Kraftstoffeinspritzdüse (35) über den Bodenoberflächenabschnitt (48a) der Aussparung (13) auf der ersten Seite und zurückkehrt über den Bodenoberflächenabschnitt (48a) der Aussparung (13) auf der zweiten Seite.

9. Brennkraftmaschine nach zumindest einem der Ansprüche 1 bis 8, wobei die Kraftstoffeinspritzdüse (35) vorgesehen ist zum Kraftstoffeinspritzen (34) in Richtung der ersten Seite der Aussparung (13), die den Bodenoberflächenabschnitt (48a) der Aussparung (13) hat, der tiefer als ein Bodenoberflächenabschnitt (48a) der Aussparung (13) auf der zweiten Seite ist.

10. Brennkraftmaschine nach Anspruch 7 oder 8, wobei die Kraftstoffeinspritzdüse (35) vorgesehen ist für das Kraftstoffeinspritzen (34) entlang der Erstreckungsrichtung der gedachten Linie (23).

11. Brennkraftmaschine nach zumindest einem der Ansprüche 1 bis 10, wobei die Aussparung (13) in einer mit Boden versehenen, im Wesentlichen zylindrischen Hohlform oder umgekehrt, im Wesentlichen kegelstumpfförmig hohlförmig gebildet ist, wobei eine Achse (46) der Aussparung (13) im Verhältnis zu der Zylinderbohrungsachse (3) geneigt ist.

12. Brennkraftmaschine nach zumindest einem der Ansprüche 1 bis 11, wobei der Motor ein Mehrventilmotor mit zumindest zwei Lufteinlassöffnungen (18) ist, die der Aussparung (13) zugewandt sind, wobei zumindest eine der Öffnungen (18) der ersten Seite der Aussparung (13) und zumindest eine weitere Öffnung der zweiten Seite der Aussparung (13) zugeordnet ist.

13. Brennkraftmaschine nach Anspruch 12, wobei zumindest die Öffnung (18), zugeordnet der zweiten Seite der Aussparung (13), mit dem Einlasskanal (17) verbunden ist, der mit einem Luftsteuerventil (43) versehen ist.

14. Brennkraftmaschine nach Anspruch 12 oder 13, wobei das Kraftstoffeinspritzventil (36) innerhalb einer Ebene zwischen den zwei Öffnungen (18) vorgesehen ist.

15. Brennkraftmaschine nach zumindest einem der Ansprüche 1 bis 14, wobei ein Zylinderkopf (6) des Motors, die Oberseitenoberfläche des Kolbens (10), die Aussparung (13) und die Zylinderbohrung (4) eine Brennkammer (14) bilden; wobei die Brennkammer (14) domförmig mit dem vorspringenden Abschnitt an der Oberseitenoberfläche des Kolbens (10) ist, ein mittlerer Abschnitt des vorspringenden Abschnittes dem Zylinderkopf (6) zwischen den Einlass- und Auslassventilen des Motors zugewandt ist, wobei der zweite Abschnitt der Aussparung (13) an dem Mittelabschnitt des Vorsprungsabschnittes vorgesehen ist.

## Revendications

1. Moteur à combustion interne du type à injection directe **caractérisé en ce qu'**il comprend au moins un piston (10) prévu à l'intérieur d'un alésage de cylindre (4) présentant un axe d'alésage de cylindre (3), ledit piston (10) présente une forme de toiture à une seule pente, un creux (13) qui est prévu sur une surface supérieure du piston (10) ; ledit creux (13) s'étend d'une première à une seconde section de celui -ci et une ligne imaginaire (23) dans ladite direction d'extension définit un premier côté dudit creux (13) et un second côté dudit creux (13), une buse d'injection de carburant (35) fait face à ladite première section du creux (13) et est prévue pour injecter le carburant (34) en direction dudit creux (13) et une bougie d'allumage (40) fait face à une seconde section dudit creux (13), une partie de décharge électrique (39) de ladite bougie d'allumage (40) est prévue au niveau dudit axe d'alésage de cylindre (3) ou à proximité de celui -ci, dans lequel les parties de surface inférieu re (48a, 48a) dudit creux (13) présentent sensiblement une forme plane à l'intérieur d'un plan commun et l'une des parties de surface inférieure (48a) du creux (13) au niveau dudit premier côté est plus profonde dans une direction de l'axe d'alésage de cyl indre (3) qu'une partie de surface inférieure (48b) du creux (13) au niveau dudit second côté, ledit creux (13) comprend une surface latérale (47) destinée à guider un mélange air/carburant (51A -C), dans lequel ladite surface latérale (47) présente une par tie arrière au niveau d'un sommet de la toiture à une seule pente du piston (10) pour empêcher le mélange (51A -C) de déborder du creux (13).

2. Moteur à combustion interne selon la revendication 1, **caractérisé en ce que** le creux (13) est formé de manière généralement circulaire en section transversale perpendiculairement à l'axe d'alésage de cylindre (3).

3. Moteur à combustion interne selon la revendication 1 ou 2, **caractérisé en ce que** ledit creux (13) comprend une surface latérale (47) et une surface inférieure (48) formées par lesdites parties de surface inférieure (48a, 48b) et la buse d'injection du carburant (35) est prévue pour injecter le carburant (34) en direction de la surface inférieure (48) dudit creux (13).

4. Moteur à combustion interne selon au moins l'une des revendications 1 à 3, **caractérisé en ce que** ladite ligne imaginaire (23) s'étend à travers ladite buse d'injection de carburant (35) et ledit axe d'alésage de cylindre (3).

5. Moteur à combustion interne selon au moins l'une des revendications 1 à 4, **caractérisé en ce que** ladite partie de décharge électrique (39) est prévue au niveau dudit axe d'alésage de cylindre (3) ou à proximité de celui-ci.

6. Moteur à combustion interne selon au moins l'une des revendications 1 à 5, caractéri sé en ce que les parties de surface inférieure (48, 48a) du creux (13) présentent une forme sensiblement plane à l'intérieur d'un plan commun.

7. Moteur à combustion interne selon au moins l'une des revendications 1 à 6, **caractérisé en ce que** des moyens destinés à générer un tourbillon d'air (43) sont prévus pour générer un tourbillon (44) d'air d'admission à l'intérieur de la chambre de combustion (14) dans une direction orientée sensiblement autour de l'axe d'alésage de cylindre (3).

8. Moteur à combust ion interne selon la revendication 7, **caractérisé en ce que** lesdits moyens destinés à générer un tourbillon d'air (43) sont prévus pour générer un tourbillon (44) qui s'écoule depuis la buse d'injection de carburant (35) sur la partie de surface inférieure (48a) du creux (13) au niveau dudit premier côté et retourne sur la partie de surface inférieure (48b) du creux (13) au niveau dudit second côté.

9. Moteur à combustion interne selon au moins l'une des revendications 1 à 8, **caractérisé en ce que** la buse d'injection de carburant (35) est prévue pour injecter le carburant (34) en direction dudit premier côté dudit creux (13) présentant la partie de surface inférieure (48a) du creux (13) qui est plus profonde qu'une partie de surface inférieure (48b) du creux (13) au niveau dudit second côté.

10. Moteur à combustion interne selon la revendication 7 ou 8, **caractérisé en ce que** la buse d'injection de carburant (35) est prévue pour injecter le carburant (34) le long de la direction d'extension de la ligne imaginaire (23).

11. Moteur à combustion interne selon au moins l'une des revendications 1 à 10, **caractérisé en ce que** le creux (13) présente une forme creuse enfoncée, généralement cylindrique, ou à l'inverse, une forme creuse généralement en cône tronqué, da ns lequel un axe (46) du creux (13) est basculé par rapport à l'axe d'alésage de cylindre (3).

12. Moteur à combustion interne selon au moins l'une des revendications 1 à 11, **caractérisé en ce que** ledit moteur est un moteur multisoupape comprenant au moins deux orifices d'admission d'air (18) faisant face au dit creux (13), au moins un desdits orifices (18) est associé au dit premier côté dudit creux (13) et au moins un autre orifice est associé au dit second côté dudit creux (13).

13. Moteur à combustion interne selon la revendication 12, **caractérisé en ce que** au moins ledit orifice (18) associé au dit second côté dudit creux (13) est raccordé à un passage d'admission (17) qui est pourvu d'une soupape de commande d'injection d'air secondaire (43).

14. Moteur à combustion interne selon la revendication 12 ou 13, **caractérisé en ce que** ladite soupape d'injection de carburant (36) est prévue à l'intérieur d'un plan entre lesdits deux orifices (18).

15. Moteur à combustion interne selon au moins l'une des rev endications 1 à 14, **caractérisé en ce qu'**une tête de cylindre (6) dudit moteur, ladite surface supérieure dudit piston (10), ledit creux (13) et ledit alésage de cylindre (4) définissent une chambre de combustion (14) ; ladite chambre de combustion (14) pr ésente une forme de dôme avec une partie en projection au niveau de la partie supérieure dudit piston (10), une section centrale de ladite partie en projection fait face à la tête de cylindre (6) entre les soupapes d'admission et d'échappement du moteur, dans lequel ladite seconde section du creux (13) est prévue au niveau de ladite section centrale de ladite partie de projection.
